# NEUE EUROPÄISCHE PATENTSCHRIFT

(11) **EP 0 727 398 B2**
(45) Veröffentlichungstag und Bekanntmachung des Hinweises auf die Entscheidung über den Einspruch: **16.10.2002**
(45) Hinweis auf die Patenterteilung: 06.05.1999
(21) Anmeldenummer: 95102289.6
(22) Anmeldetag: 19.02.1995
(51) Int. Cl.: C04B 28/16, C04B 11/30

(54) **Kompositzement**
Composite cement
Ciment composite

(30) Priorität: 16.02.1995 CH 45295
(43) Veröffentlichungstag der Anmeldung: 21.08.1996
(73) Patentinhaber: Sika AG, vorm. Kaspar Winkler & Co., CH-8048 Zürich (CH)
(72) Erfinder: Bürge, Theodor A., Ch-8954 Geroldswil (CH); Wombacher, Franz Dr., CH-8966 Oberwil-Lieli (CH)
(74) Vertreter: Blum, Rudolf Emil Ernst

(56) Entgegenhaltungen:
- EP-A- 0 397 963
- EP-A- 0 687 655
- DE-A- 3 204 782
- CHEMICAL ABSTRACTS, vol. 100, no. 16, 16.April 1984 Columbus, Ohio, US; abstract no. 125891, YANEV I. & AL: "Use of mineral wastes from oil shale processing as a hydraulic additive to cement" XP002013987 & TEKH. MISUL, Bd. 20, Nr. 4, Seiten 63-66,
- CHEMICAL ABSTRACTS, vol. 99, no. 14, 3.Oktober 1983 Columbus, Ohio, US; abstract no. 109805, GRABKO S. & AL.: "Durability of mortars made from ash-based portland cements containing ash from a shale-burning power plant" XP002013988 & TR. TALLIN. POLITEKH. INST., Nr. 541, Seiten 97-106,
- Preisliste Nr.22 von PCI Augsburg GmbH, gültig ab 1.April 1992
- Rezepturdatenblatt des kommerziellen Produktes Repament von PCI Augsburg GmbH vom 15.Juli 1981
- Sicherheitsdatenblatt zu dem in Repament verwendeten nicht- hydrophobierten Mörtelbinder vom 9. Juni 1994
- Herstellerbericht aus dem Jahre 1979 zu dem in Repament verwen- deten Fahrbahndeckenzement PZ 35 F (Märker,Harburg)
- Datenblatt zu Dilacon von Industria Siciliana Cementi
- Merkblatt zu Melment von SKW Trostberg AG
- Produktinformationsblätter 188 zu PCI-Repament von Januar 1979, Oktober 1979, Mai 1980, Februar 1981, September 1981, Juli 1982, April 1986, und März 1988
- Preislisten von PCI Polychemie Augsburg GmbH, Ausgaben Nr. 22, 1.4.1982, Nr. 25,1.3.1985, 1.1.1989
- Rezepturdatenblätter für PCI-Repament vom 29.10.1982, 3.2.1983, und2.8.1989
- Schreiben der Rohrbach Zement GmbH an PCI Augsburg vom 23.10.2001
- Eidesstattliche Versicherung vom Herrn Werner Stohr, Laborleiter bei PCI Augsburg vom 23.10.2001, betreffend verschiedene Aspekte zur Zusammensetzung und Verfügbarkeit von PCI-Repament vor dem Prioritätstag des angegriffenen Patents.
- Merkblatt zu Melment F10 von SKW Trostberg AG, datiert auf März 1987
- Ullmann's Enzyklopädie der technischen Chemie, 4.Aufl.,1983, S.545-550

## Beschreibung

Die vorliegende Erfindung betrifft ein Kompositzement für die Herstellung von Bau- und Werkstoffen.
Die konventionellen hydraulischen Bindemittel wie Zement und Kalk haben Abbindezeiten um 5 Stunden und eine ausgeprägt langsame Festigkeitsentwicklung. Für viele Anwendungen wie z.B. der Reparatur von Strassen, Brücken, Flugpisten etc. ist jedoch ein rasches Erhärten äusserst wichtig.
Durch kürzere Reparaturzeiten können diese Bauwerke rascher wieder dem Verkehr übergeben werden und damit enorme Kosten gespart werden. Eine rasche Festigkeitsentwicklung ist deshalb von volkswirtschaftlichem Interesse.
Oelschiefer ist ein fossiler Energieträger, welcher eine beträchtliche Menge organischer Materie in einer Matrix von feinen anorganischen Mineralien enthält. Um das Oel aus dem Oelschiefer zu gewinnen, muss die organische Substanz, das Kerogen, thermisch zersetzt werden. Zurück bleibt ein anorganischer Rückstand, welcher als gebrannter Oelschiefer bezeichnet wird. Ein grosser Teil des heute anfallenden gebrannten Oelschiefers muss nutzlos auf Deponien entsorgt werden.
Die grössten Vorkommen an Oelschiefer liegen in den USA, Brasilien, auf dem Gebiet der ehemaligen UdSSR, Kanada, Italien, Deutschland und Australien.
Neben der Bezeichnung Oelschiefer, bituminöser Schiefer oder Kerogen-Gestein findet man Namen, die sich auf das Material einer bestimmen Lagerstätte oder eines Gebietes beziehen, wie z.B. Blätterkohle, Coorongite, Ichthyol-Schiefer, Kukersit, Marahunit, Posidonienschiefer, Stinkschiefer, Tasmanit oder Torbanit.
Die häufigsten Mineralien in den Oelschieferablagerungen sind Quarz, Feldspat, verschiedene Typen von Ton und verschiedene Carbonate, z.B. Calcium- und Magnesiumcarbonat.

**Tab. 1**

| Mineralogische Zusammensetzung der anorganischen Substanz amerikanischer Oelschiefer (Green River) | | |
|---|---|---|
| Mineral | Chemische Formel | Anteil in Massen-% |
| Dolomit | CaMg(CO₃)₂ | 32 - 33 |
| Kalkspat | CaCO₃ | 16 - 20 |
| Quarz | SiO₂ | 10 - 15 |
| Tone (Illit) | K₂O.3Al₂O₃.6SiO₂.2H₂O | 11 - 19 |
| Orthoklase (Adular) | KAlSi₃O₈ | 4 - 6 |
| Plagioklase (Albit) | NaAlSi₃O₈.CaAl₂Si₂O₈ | 10 - 12 |
| Zeolithe (Analcim) | NaAlSi₂O₆.H₂O | 1 - 7 |
| Pyrit, Markasit | FeS₂ | 1 - 3 |

Oelschiefer ist ein geschichtetes Sedimentgestein, welches mehr als 33 % Asche sowie organische Bestandteile enthält, welche bei der Destillation Oel ergeben, aber nur in unwesentlichen Mengen mit herkömmlichen Lösungsmitteln für Petroleum extrahiert werden können. Zur Energiegewinnung muss der Oelschiefer auf geeignete Art und Weise zersetzt werden. Es sind diverse Schwel-, Verbennungs- und Vergasungsverfahren bekannt.
Ein kommerzieller Brennprozess für Oelschiefer und bitumenhaltige Rohstoffe mit mergelartigem Charakter ist das Wirbelschicht- Verfahren. Ein solches Verfahren wird beschrieben in
Zement, Kalk, Gips. vol. 58, no. 7. Juli 1969.
Wiesbaden DE Seiten 293 - 296;
R. Rohrbach: "Herstellung von Oelschieferzement und
Gewinnung elektrischer Energie aus Oelschiefer nach dem Rohrbach-Lurgi-Verfahren".
Das Hauptprodukt ist dabei der gebrannte Oelschiefer, der in der Baustoffindustrie verwendet wird. Durch die freiwerdende Wärme wird primär die Brenntemperatur im Ofenraum aufrechterhalten. Zusätzlich wird Energie gewonnen.
Dieser Prozess liefert aufgrund einer optimalen Verbrennungstemperatur von 800°C einen Abbrand mit hydraulischen Eigenschaften, welche ohne Kalkzusatz folgende Druckfestigkeiten gemäss DIN 1164 ergeben:

| | |
|---|---|
| Druckfestigkeit nach | 3 Tagen ∼ 5 MPa |
| | 7 Tagen ∼ 16 MPa |
| | 28 Tagen ∼ 33 MPa. |

Ein nordafrikanischer gebrannter Oelschiefer weist beispielsweise nach 28 Tagen eine Druckfestigkeit von nur 22 MPa auf.
Gemäss EN 480-2 (DIN 1164) ist gebrannter Oelschiefer ein hydraulisch erhärtender Stoff. Er besteht überwiegend aus Calciumsilikaten, Calciumaluminaten Calciumsulfaten und reaktionsfähigem Siliziumdioxid. Röntgenographisch können die folgenden mineralogischen Phasen nachgewiesen werden:
Dicalciumsilikat, Tricalciumaluminat, Moncalciumaluminat, Anhydrit, Calciumoxid und Calciumaluminatferrit.

| Typische chemische Zusammensetzungen | | | | |
|---|---|---|---|---|
| Verbindungen | **HERKUNFT** | | | |
| | Schottland | Colorado/USA | BRD | Israel Tzefa Efe |
| CaO | 5.3% | 21.8% | 16-60% | 44.5% |
| SiO₂ | 48.5 | 32.0 | 12.25 | 19.0 |
| Al₂O₃ | 25.2 | 7.2 | 9-12 | 8.3 |
| Fe₂O₃ | 12.1 | 2.7 | 6-7 | 4.3 |
| MgO | 2.2 | 7.5 | 1.4-2.0 | 0.7 |
| Na₂O + K₂O | - | 2.3 | - | 1.1 |
| P₂O₅ | - | - | - | 2.4 |
| SO₃ | - | - | 9-10 | 8.5 |
| Organischer | - | - | - | 0.9 |
| Anteil | | | | |
| CO₂ | - | - | - | 6.2 |
| Glühverlust | - | 20.0 | - | 11.3 |

Gebrannter Oelschiefer hat ein relativ langsames hydraulisches Erhärten, was aus dem Erstarrungsverhalten hervorgeht. Der Abbindebeginn liegt gemäss EN 480-2 (DIN 1164) bei ca. 2,5 Stunden, das Abbindeende bei ca. 5 Stunden.
Gebrannter Oelschiefer wird zur Herstellung von Portlandölschieferzement verschiedener Festigkeitsklassen verwendet, wobei die Anteile des Portlandzementklinkers 64 - 90 % und der Anteil des gebrannten Oelschiefers 10 - 35 % betragen dürfen.
Als Ursache für die hydraulische Erhärtung von gebranntem Oelschiefer sind einerseits die Klinkermineralien, vor allem Dicalciumsilikat und Calciumaluminat sowie die Reaktion des gebrannten Kalkes mit dem Siliziumdioxid verantwortlich. Gleichzeitig tritt eine Bildung von Ettringit (Calciumsulfoaluminat) ein. Für viele Anwendungszwecke sind die mit gebranntem Oelschiefer und dessen Abmischungen mit Portlandzement erreichbaren Eigenschaften wie langsame Abbindezeiten und geringe Festigkeitsentwicklung ungenügend.
A. Bentur et al. haben in der Publikation American Ceramic Society Bulletin. vol. 63, no. 2. Januar 1984, Columbus US Seiten 209 - 294 "Modification of the Cementing Properties of Oil Shale Ash" die optimalen Brenntemperaturen des Oelschiefers auf die Hydratation sowie die Auswirkung eines Zusatzes von Gips (Calciumsulfat-Dihydrat) und Portlandzement untersucht. Bei Gipszusatz wurden dabei Druckfestigkeiten nach 28 Tagen von max. 28 MPa erreicht. Bei Abmischungen mit Portlandzement wurde gezeigt, dass mit abnehmendem Zementgehalt die Druckfestigkeiten kontinuierlich abnehmen und bei einem Zementgehalt von beispielsweise 25 % nur noch 30 MPa nach 28 Tagen betragen.
Bei dieser Mischung wurde dann auch das grösste Schwinden mit 0,24 % im Mörtel und 0,31 % in der Bindemittelpaste ermittelt.

In der DE-A 3 610 722 wird die Verwendung eines stark kohlehaltigen Abbrandes aus Schieferton zusammen mit Zement beschrieben.
Bei diesem Schieferton handelt es sich nicht um Oelschiefer. Vorgeschlagen wird die Herstellung einer Mörtelmischung mit Wasser mit einer Temperatur von 60 bis 80 °C. Unter diesen Bedingungen werden Frühfestigkeiten nach 3 Std. von 6,2 MPa und nach 5 Std. von 19,4 MPa erreicht. Bei Verwendung von Wasser von 20°C lauten die Festigkeitswerte 0,38 MPa resp. 1,10 MPa.

In der GB-A 664 369 wird ebenfalls die Verwendung von kohlehaltigen Abfallprodukten aus der Kohleindustrie behandelt. Diese Abfälle werden gemischt mit kolloidalem Siliciumdioxid und Kaolinit wobei durch Brennen Steingutwaren resp. Steinzeug hergestellt werden.

US-A 4 375 985 beschreibt die Herstellung von Slurries aus gebranntem Oelschiefer und einem hohen Anteil an Wasser sowie Zusätze von Abbindeverzögerern und deren Verwendung als Injektionsmittel zur Stabilisierung von Böden und des Untergrundes. Die mit diesen Slurries nach Aushärtung erreichten Festigkeiten liegen nach 7 Tagen zwischen 1,3 MPa und 17,4 MPa.

In EP 0 397 963 B1 werden Mischungen von gebranntem Oelschiefer und Calciumaluminaten oder Aluminaten 1- und/oder 2-wertiger Kationen und amorphen Oxiden und Hydroxiden als Beschleuniger beschrieben. Damit können Festigkeiten von bis 14,9 MPa nach 2 Std. und 28-Tage Festigkeiten bis 61,1 MPa erreicht werden.

Eine Aufgabe der vorliegenden Erfindung war, die Eigenschaften auf wirtschaftliche Art zu verbessern und' damit gewaltige Mengen von gebranntem Oelschiefer neuen volkswirtschaftlich interessanten Anwendungsmöglichkeiten zuzuführen.
Aufgrund zahlreicher Versuche hat sich überraschenderweise gezeigt, dass gebrannter Oelschiefer im Erhärten so beschleunigt werden kann, dass die bisher üblichen 7 Tage Druckfestigkeiten bereits nach 2 Stunden und 28 Tage Druckfestigkeiten in weniger als 24 Stunden erreicht werden können.
Es ist eine Aufgabe der vorliegenden Erfindung, einen Kompositzement zur Verfügung zu stellen, welcher im Vergleich zu bekannten Bindemitteln viel rascher aushärtet und sowohl die Frühfestigkeit, die 28-Tage Festigkeit sowie das Schwindverhalten verbessert. Ebenso soll im erfindungsgemässen Kompositzement ein Abfallprodukt, nämlich gebrannter Oelschiefer, einer neuen sinnvollen Verwendung zugeführt werden.

Für die Erhärtung von Zementen ist die Bildung von hydratisiertem Calciumsulfoaluminat durch Reaktion von Tricalciumaluminat und Gips verantwortlich.

Diese Reaktion findet umso schneller statt je reaktiver der Klinker ist und je grösser die Sulfatkonzentration im Anmachwasser ist.
Das Bindemittel aus dem erfindungsgemässen Kompositzement (eine Zusammensetzung ist in Beispiel 1 angegeben) kann durch Zugabe von wasserfreiem Calciumsulfoaluminat beschleunigt werden. Dabei geht der Sulfatgehalt aus dem gebrannten Oelschiefer mit in die Reaktion ein und es können bereits ab 2 Stunden überraschend hohe Druckfestigkeiten gemessen werden. Der nachfolgende Versuch (Tabelle 1) zeigt die Festigkeitswerte an Normenmörtel, basierend auf dem erfindungsgemässen Kompositzement des Beispiels 1.

**Tabelle 1**

| | Dos. Gew. % | Festigkeiten (MPa) | | | | | | | |
|---|---|---|---|---|---|---|---|---|---|
| Zusatz | | Alter: 2 Std. | | Alter: 4 Std. | | Alter: 1 Tg | | Alter: 7 Tage | |
| | | Biegezug | Druck | Biegezug | Druck | Biegezug | Druck | Biegezug | Druck |
| ohne | - | 0.4 | 0.4 | 0.6 | 1.3 | 5.7 | 31.7 | 7.8 | 73.2 |
| Calciumsulfoaluminat | 1 | 0.9 | 1.8 | 2.0 | 8.7 | 6.3 | 37.1 | 8.0 | 66.3 |
| | 2 | 4.2 | 22.9 | 4.7 | 31.2 | 5.3 | 38.1 | 8.2 | 62.5 |
| | 3 | 4.0 | 26.0 | 5.1 | 29.4 | 6.7 | 38.5 | 9.0 | 55.4 |

Da die Sulfatkonzentration für die Festigkeitsentwicklung sehr wichtig ist, wurde der Zusatz von Calciumsulfat in drei verschiedenen Modifikationen geprüft:

CaSO4 • 2H2O

CaSO4 • 1/2H2O

CaSO4 • anhydrisch

Bei diesen Versuchen wurde die Dosierung von Calciumsulfoaluminat konstant bei 15 % und die der Calciumsulfat Modifikation bei 5 % gehalten. Die Resultate von Versuchen an Normenmörtel sind in Tabelle 2 zusammengestellt.

**Tabelle 2:**

| | Festigkeiten (MPa) | | | | | | | |
|---|---|---|---|---|---|---|---|---|
| Modifikation des Calciumsulfates | Alter: 2 Std. | | Alter: 4 Std. | | Alter: 1 Tg | | Alter: 7 Tage | |
| | Biegezug | Druck | Biegezug | Druck | Biegezug | Druck | Biegezug | Druck |
| | | | | | | | | |
| CaSO4 · 1/2H2O | - | - | 1.0 | 2.1 | 5.5 | 37.6 | 11.8 | 77.0 |
| CaSO4 · 2H2O | - | - | 2.0 | 10.1 | 8.4 | 45.6 | 10.3 | 79.0 |
| CaSO4 anhydrisch | 1.5 | 7.4 | 4.0 | 27.7 | 7.1 | 49.3 | 10.1 | 77.0 |

Völlig überraschend zeigte sich dabei die extreme Steigerung der Frühfestigkeiten bei Verwendung des anhydrischen Calciumsulfates.
Die Uebertragung dieser Erkenntnis auf Mörtelversuche bei denen eine zunehmende Dosierung von Calciumsulfoaluminat und anhydrischen Calciumsulfat geprüft wurde, zeigte die unerwartete Festigkeitsentwicklung.

**Tabelle 3**

| Zusatzmenge Gew.% | | Festigkeiten (MPa) | | | | | | | | | |
|---|---|---|---|---|---|---|---|---|---|---|---|
| Calciumsufoaluminat | anhydrisches Calciumsulfat | Alter: 2 Std. | | Alter: 4 Std. | | Alter: 1 Tg | | Alter: 7 Tage | | Alter: 28 Tage | |
| | | Biegezug | Druck | Biegezug | Druck | Biegezug | Druck | Biegezug | Druck | Biegezug | Druck |
| 2.35 | 0.75 | weich | | 0.4 | 0.8 | 4.6 | 28.1 | 12.0 | 84.9 | 9.2 | 98.7 |
| 3.75 | 1.25 | 1.3 | 4.6 | 2.0 | 9.8 | 5.6 | 37.6 | 12.9 | 83.2 | 9.6 | 85.9 |
| 6 | 2 | 4.5 | 25.9 | 6.7 | 38.9 | 9.5 | 49.4 | 12.7 | 69.0 | 12.2 | 82.7 |
| 7.5 | 2.5 | 7.1 | 48.2 | 7.9 | 50.3 | 7.0 | 57.1 | 10.8 | 65.6 | 9.5 | 68.1 |

Der im Kompositzement enthaltene Zementklinker kann als reiner Klinker oder in Form von Portlandzement, Weisszement oder Tonerdeschmelzzement zugegeben werden.

Die Erfindung ist durch die Merkmale in den unabhängigen Ansprüchen gekennzeichnet. Bevorzugte Ausführungsformen sind in den abhängigen Ansprüchen definiert.

### Beispiel 1

Als Beispiel für einen erfindungsgemässen Kompositzement kann angegeben werden:

| | | |
|---|---|---|
| Gebrannter Oelschiefer | 53.5 % | Bindemittel |
| Zementklinker | 25 % | |
| Superverflüssiger * | 1.5 % | |
| Calciumsulfoaluminat ** | 15 % | Aktivator |
| Anhydrisches Calciumsulfat | 5 % | |

| | | |
|---|---|---|
| * Sulfoniertes Melamin-Formaldehyd-Kondensat | | |
| ** Technisches Calciumsulfoaluminat enthaltend ca. 60 % C₄A₃S | | |

Hierbei werden die Komponenten Calciumsulfoaluminat und anhydrisches Calciumsulfoaluminat als sogenannte Aktivatorkomponente bezeichnet (in diesem Fall 25 % auf den Rest des Kompositzement, das sogenannte Bindemittel)

Dieser Kompositzement kann mit Sand oder mit Sand und Kies gemischt zu Bauwerkstoffen verarbeitet werden.
In den nachfolgenden Beispielen werden Bindemittel- resp. Aktivator-Produkte mit den obigen Mengenverhältnissen und unter Kompositzement ein Produkt der obigen Zusammensetzung verstanden.

### Beispiel 2

In diesem Beispiel wird der Anteil der Aktivatorkomponenten im Bezug auf das Bindemittel variiert und der entsprechende Einfluss auf die Abbindezeiten aufgezeigt.

Die Abbindezeiten wurden mit 30 % Wasser gemäss Vicat-Methode EN 480-2 (DIN 1164) gemessen.

| Bindemittel (Gew. %) | Aktivator (Gew. %) | Abbindezeiten (min.) | |
|---|---|---|---|
| | | Beginn | Ende |
| 100 | 0 | 160 | 210 |
| 85.1 | 14.9 | 30 | 37 |
| 83.33 | 16.66 | 18 | 24 |
| 81.6 | 18.4 | 15 | 19 |
| 80 | 20 | 13 | 17 |

### Beispiel 3

Die Variation des Aktivatorgehaltes hat auch Auswirkungen auf die Druckfestigkeiten, welche an aus Normenmörtel hergestellten Prismen der Grösse 4x4x16 cm bestimmt wurden.

Diese Mischungen setzten sich wie folgt zusammen:

| | |
|---|---|
| Kompositzement: | 1000 g |
| Sand 0 - 4 mm: | 3000 g |
| Wasser: | 430 g |

Die verwendeten Kompositzemente lehnen sich an die im Beispiel 2 verwendeten an.

| Bindemittel (Gew. %) | Aktivator (Gew. %) | Druckfestigkeiten (N/mm2) | | |
|---|---|---|---|---|
| | | 4h | 24h | 28T |
| 100 | 0 | 0 | 17 | 40 |
| 85.1 | 14.9 | 5 | 34 | 80 |
| 83.33 | 16.66 | 20 | 35 | 83 |
| 81.6 | 18.4 | 25 | 35 | 79 |
| 80 | 20 | 28 | 37 | 69 |

Mit einem derartigen Kompositzement lassen sich auch Betone herstellen und die verwendete Menge des Kompositzementes zeigt einen Einfluss auf die Festigkeitsentwicklung, es können aber auch mit Mischungen tiefen Kompositzementgehaltes immer noch gute Festigkeitswerte erhalten werden, was einen beträchtlichen wirtschaftlichen Vorteil darstellt.

### Beispiel 4

Die Betonmischungen entsprechen 1/40 m3 und setzten sich wie folgt zusammen:

| | |
|---|---|
| Kompositzement: | 4.5 - 9 kg (entspr. 180 - 360 kg/m3) |
| Sand und Kies 0 - 32 mm (gem. ENV 196) | 50 kg |

Der verwendete Kompositzement entspricht dem im ersten Beispiel erwähnten

| Kompositzement kg/m3 | Wasser/Zement-Faktor | Druckfestigkeiten (N/mm2) | | | |
|---|---|---|---|---|---|
| | | 4h | 24h | 7 T | 28T |
| 360 | 0.433 | 28.7 | 39.6 | 53 | 64.3 |
| 300 | 0.433 | 26.2 | 40.3 | 52.8 | 68 |
| 240 | 0.483 | 24 | 35 | 52.4 | 69.6 |
| 180 | 0.566 | 12.6 | 25.5 | 40.3 | 51.7 |

Solche Zementmischungen können mit Verzögerern wie Phosphonobutantricarbonsäure verzögert werden, um eine längere Verarbeitungszeit zu erreichen. Dies ist im folgenden Beispiel dargestellt.

### Beispiel 5

Die Betone wurden mit dem in Beispiel 1 erwähnten Kompositzement und einem Kompositzementgehalt von 320 kg/m3 nach der in Beispiel 4 erwähnten Methode hergestellt. Die Verarbeitungszeit wird durch Messen des Ausbreitmasses (ABM) gemäss ISO 9812 (DIN 1048) bestimmt.

| Verzögerer-Dosierung | w/z | ABM (cm) nach min | | | | |
|---|---|---|---|---|---|---|
| | | 0 | 15 | 30 | 45 | 60 |
| ohne | 0.455 | 43 | 27 | - | - | - |
| PBT 0.2 % | 0.468 | 43 | 30 | 25 | - | - |
| PBT 0.3 % | 0.482 | 47 | 33 | 28 | - | - |
| PBT 0.4 % | 0.501 | 43 | 40 | 38 | 36 | 32 |
| PBT 0.5 % | 0.521 | 43 | 40 | 36 | 35 | 33 |
| PBT: Phosphonobutantricarbonsäure | | | | | | |
| Verzögerer-Dosierung in Gew.-% auf Zement gerechnet | | | | | | |

Die entsprechenden Festigkeitsentwicklungen fallen dementsprechend geringer aus, wie im nächsten Beispiel mit denselben Betonmischungen dargelegt wird.

### Beispiel 6

Festigkeitsentwicklung von abbindeverzögerten Betonen gemäss Beispiel 5 .

| Verzögerer | w/z | Druckfestigkeiten (N/mm2) | | | |
|---|---|---|---|---|---|
| | | 4h | 5h | 6h | 24h |
| keines | 0.455 | 25 | 28 | 29 | 34 |
| PBT 0.2 % | 0.468 | 20 | 25 | 26 | 34 |
| PBT 0.3 % | 0.482 | 16 | 22 | 24 | 32 |
| PBT 0.4 % | 0.501 | 5 | 13 | 19 | 32 |
| PBT 0.5 % | 0.521 | 1.4 | 4 | 8.5 | 29 |

Die im allgemeinen mit frühhochfesten Zementen bekannten Schwindprobleme können durch Variation sowohl des Gesamt-Aktivatorgehaltes als auch des Gewichtsverhältnisses des den Aktivator bildenden Calciumsulfoaluminates zu anhydrischem Calciumsulfat beeinflusst werden, wie in den folgenden Beispielen gezeigt wird.

### Beispiel 7

Schwindmessungen an aus Normenmörtel gemäss Beispiel 3 hergestellten Prismen. Die verwendeten Bindemittel unterscheiden sich durch den Aktivatorgehalt. Die Prüfkörper wurden bei 23° bei 50 % rF. gelagert, die 0-Messung nach 4 Stunden durchgeführt.

| Bindemittel (Gew. %) | Aktivator (Gew. %) | Schwinden in 0/00 | | |
|---|---|---|---|---|
| | | 1 Tag | 14 Tage | 28 Tage |
| 100 | 0 | -1.093 | -1.734 | -2.401 |
| 85.1 | 14.9 | 0.048 | -0.343 | -0.410 |
| 83.33 | 16.66 | -0.152 | -0.729 | -0.820 |
| 81.6 | 18.4 | -0.076 | -0.424 | -0.524 |
| 80 | 20 | 0.014 | -0.210 | -0.240 |

### Beispiel 8

Die Veränderung des Verhältnisses Calciumsulfoaluminat zu anhydrischem Calciumsulfat bewirkt ebenfalls Veränderungen im Schwindverhalten, wie diese Untersuchungen zeigen. Der Gewichtsanteil Calciumsulfoaluminat wurde konstant bei 13.8 % belassen, die Mörtelzusammensetzung und Lagerung entsprechen den in Beispiel 7 erwähnten.

| Bindemittel (Gew. %) | Anhydrisches Calciumsulfat (Gew. %) | Schwinden in 0/00 | | |
|---|---|---|---|---|
| | | 1 Tag | 14 Tage | 28 Tage |
| 81.6 | 4.6 | -0.057 | -0.405 | -0.500 |
| 82.75 | 3.45 | -0.048 | -0.210 | -0.280 |
| 83.33 | 2.87 | -0.040 | -0.190 | -0.240 |

Entgegen den Anführungen in der Fachliteratur und der praktischen Erfahrung, wo bei höherer Zugabemenge von anhydrischem Calciumsulfat zu zementösen Stoffen ein geringeres Schwinden auftritt, wurde für den Fachmann völlig überraschend ein umgekehrtes Verhalten mit dem erfindungsgemässen Kompositzement festgestellt. Im vorliegenden Falle wird nämlich ein geringeres Schwinden bei kleinerer Zugabemenge an anhydrischem Calciumsulfat festgestellt.

Durch den Zusatz von Aluminiumoxid kann die bei tieferer Temperatur langsamer verlaufende Festigkeitsentwicklung zusätzlich beschleunigt werden, wie im folgenden Beispiel erläutert wird.

Der verwendete Kompositzement wies einen Bindemittelgehalt von 82 % und einen dementsprechenden Aktivatorgehalt von 18 % auf.

Die Mörtelmischungen wurden gemäss Beispiel 3 hergestellt und bei 10° C gelagert.

### Beispiel 9

| Aluminiumoxid-Zusatz | Druckfestigkeiten (N/mm2) | | |
|---|---|---|---|
| | 4h | 5h | 6h |
| ohne | 7.5 | 15 | 16.6 |
| 0.5% | 16 | 25 | 26 |
| 1 % | 20 | 28 | 29 |
| 2 % | 27 | 28 | 30 |
| Aluminiumoxidzusatz auf Gew.-% des Zementes | | | |

## Patentansprüche

1. Kompositzement für die Herstellung von Bau- und Werkstoffen, der gebrannten Oelschiefer, Zementklinker, Calciumsulfoaluminat (C₄A₃S), anhydrisches Calciumsulfat sowie wenigstens ein wasserreduzierendes Mittel enthält, **dadurch gekennzeichnet, dass** er folgende Zusammensetzung aufweist:
10 - 90 Gew.% gebrannten Oelschiefer
5 - 60 Gew. % Zementklinker
1 - 30 Gew. % Calciumsulfoaluminat
1 - 10 Gew.% Anhydrisches Calciumsulfat
0.01 - 10 Gew.% wasserreduzierendes Mittel
0 - 10 Gew.% abbindebeschleunigendes Mittel
0 - 10 Gew.% abbindeverzögerndes Mittel
0 - 30 Gew.% Polymere
0 - 10 Gew.% Fasern.

2. Kompositzement gemäss Anspruch 1, **dadurch gekennzeichnet, dass** es noch wenigstens ein abbindebeschleuningendes und/oder ein abbindeverzögerndes Mittel und/oder Polymer und/oder Fasern enthält.

3. Kompositzement gemäss Anspruch 1 oder 2, **dadurch gekennzeichnet dass** das abbindebeschleunigende Mittel Aluminiumoxid ist.

4. Kompositzement gemäss Anspruch 1 oder 2, **dadurch gekennzeichnet, dass** das abbindeverzögerende Mittel ein Phosphonsäurederivat, vorzugsweise eine Phosphonalkantricarbonsäure oder deren Salze ist.

5. Kompositzement gemäss einem der Ansprüche 1 bis 4, **dadurch gekennzeichnet, dass** er Zementklinker mit weniger als 1 % Calciumsulfat enthält.

6. Kompositzement gemäss einem der Ansprüche 1 bis 5, **dadurch gekennzeichnet, dass** das wasserreduzierende Mittel ein Betonverflüssiger oder ein Fliessmittel auf der Basis eines Melamin-, Naphthalin-, Acrylsäure- oder Maleinsäure-Copolymer ist.

7. Kompositzement gemäss einem der Ansprüche 1 bis 6, **dadurch gekennzeichnet, dass** das Polymer ein wasserlösliches, sulfoniertes Kunstharz, ein in Wasser dispergierbares Vinyl-, Styrol-, Acrylcopolymer oder eine Kombination aus einem emulgierbaren Epoxidharz und einem emulgierbaren Härter ist.

8. Kompositzement gemäss einem der Ansprüche 1 bis 7, **dadurch gekennzeichnet, dass** die Fasern aus Polypropylen, Polyester, Polyamid, Glas, Metall oder Kohlenstoff sind.

9. Verfahren zum Aushärten des Kompositzements gemäss einem der Ansprüche 1 bis 8, **dadurch gekennzeichnet, dass** man den Kompositzement mit Wasser sowie gegebenenfalls weiteren Zusatzstoffen vermischt, und bei Temperaturen im Bereich von -30°C bis +150°C oder durch Anwendung von Mikrowellen aushärten lässt.

## Claims

1. Composite cement for the production of building and construction materials containing burnt oil shale, cement clinker, calcium sulfoaluminate (C₄A₃S), anhydrous calcium sulfate as well as at least one water-reducing agent, **characterized in that** it has the following composition:
10 - 90 % by weight burnt oil shale
5 - 60 % by weight cement clinker
1 - 30 % by weight calcium sulfoaluminate
1 - 10 % by weight anhydrous calcium sulfate
0.01-10 % by weight water-reducing agent
0 - 10 % by weight set-accelerating agent
0 - 10 % by weight set-retarding agent
0 - 30 % by weight polymers
0 - 10 % by weight fibres.

2. Composite cement according to claim 1, **characterized in that** it contains at least one set-accelerating and/or set-retarding agent and/or polymer and/or fibres.

3. Composite cement according to claim 1 or 2, **characterized in that** the set-accelerating agent is alumina.

4. Composite cement according to claim 1 or 2, **characterized in that** the set-retarding agent is a phosphonic acid derivative, preferably a phosphonoalkane tricarboxylic acid or salts thereof.

5. Composite cement according to anyone of claims 1 to 4, **characterized in that** it contains cement clinker with less than 1% calcium sulfate.

6. Composite cement according to anyone of claims 1 to 5, **characterized in that** the water-reducing agent is a concrete thinner or a plasticizer on the basis of a melamine, naphthalene, acrylic acid or maleic acid copolymer.

7. Composite cement according to anyone of claims 1 to 6, **characterized in that** the polymer is a water-soluble, sulfonated synthetic resin, a water-dispersible copolymer of vinyl, styrene, acryl, or a combination of an emulsifiable epoxy resin and an emulsifiable curing agent.

8. Composite cement according to anyone of claims 1 to 7, **characterized in that** the fibres are of polypropylene, polyester, polyamide, glass, metal or carbon.

9. Process for the curing of the composite cement according to anyone of claims 1 to 8, **characterized in that** the composite cement is mixed with water as well as optionally further additives, and that it is cured at temperatures in the range of from -30°C to +150°C or by application of micro waves.

## Revendications

1. Ciment composite pour la fabrication de matériaux de construction et de matières premières, qui contient du schiste bitumineux calciné, du clinker, du sulfoaluminate de calcium (C4A3S), du sulfate de calcium anhydre ainsi qu'au moins un agent de réduction de l'eau, **caractérisé en ce qu'**il présente la composition suivante :
10-90% en poids de schiste bitumineux calciné
5-60% en poids de clinker
1-30% en poids de sulfoaluminate de calcium
1-10% en poids de sulfate de calcium anhydre
0,01-10% en poids d'agent de réduction de l'eau
0-10% en poids d'agent accélérateur de prise
0-10% en poids d'agent retardateur de prise
0-30% en poids de polymères
0-10% en poids de fibres.

2. Ciment composite suivant la revendication 1, **caractérisé en ce qu'**il contient encore au moins un agent accélérateur de prise et/ou retardateur de prise et/ou un polymère et/ou des fibres.

3. Ciment composite suivant l'une des revendications 1 ou 2, **caractérisé en ce que** l'agent accélérateur de prise est de l'oxyde d'aluminium.

4. Ciment composite suivant l'une des revendications 1 ou 2, **caractérisé en ce que** l'agent retardateur de prise est un dérivé d'acide phosphonique, de préférence un acide phosphonalcanetricarboxylique ou ses sels.

5. Ciment composite suivant l'une des revendications 1 à 4, **caractérisé en ce qu'**il contient du clinker avec moins de 1% de sulfate de calcium.

6. Ciment composite suivant l'une des revendications 1 à 5, **caractérisé en ce que** l'agent de réduction de l'eau est un fluidifiant du béton ou un agent d'écoulement à base d'un copolymère de mélamine, de naphtalène, d'acide acrylique ou d'acide maléique.

7. Ciment composite suivant l'une des revendications 1 à 6, **caractérisé en ce que** le polymère est une résine synthétique sulfonée, soluble dans l'eau, un copolymère vinylique, de styrène, acrylique qui peut être dispersé dans l'eau ou une combinaison d'un résine époxy émulsionnable et d'un agent de durcissement émulsionnable.

8. Ciment composite suivant l'une des revendications 1 à 7, **caractérisé en ce que** les fibres sont à base de polypropylène, de polyester, de polyamide, de verre, de métal ou de carbone.

9. Procédé de durcissage du ciment composite suivant l'une des revendications 1 à 8, **caractérisé en ce qu'**on mélange au ciment composite de l'eau ainsi qu'éventuellement d'autres additifs et **en ce qu'**on laisse durcir à des températures de l'ordre de -30°C à +150°C ou par application de micro-ondes.
